# FASCICULE DE BREVET EUROPEEN

(11) **EP 0 713 892 B1**
(45) Date de publication et mention de la délivrance du brevet: **10.05.2000**
(21) Numéro de dépôt: 95203121.9
(22) Date de dépôt: 15.11.1995
(51) Int. Cl.: C08F 265/04, C08F 291/00

(54) **Copolymères greffés du chlorure de vinyle présentant une résistance aux chocs élevée, procédé pour les produire et utilisation de ces copolymères pour l'extrusion de profilés**
Pfropfcopolymere aus Vinylchlorid mit hoher Schlagzähigkeit, Verfahren zu deren Herstellung und Verwendung dieser Copolymere in Strangpressen von Profilen
Graft copolymers from vinylchloride with high impact resistance, their production process and use for the extrusion of profiles

(30) Priorité: 25.11.1994 BE 9401071
(43) Date de publication de la demande: 29.05.1996
(73) Titulaire: SOLVAY, B-1050 Bruxelles (BE)
(72) Inventeur: Bodart, Vincent, B-5001 Namur (BE); Gloesener, Daniel, B-5380 Sart d'Avril-Fernelmont (BE)
(74) Mandataire: Eischen, Roland

(56) Documents cités:
- EP-A- 0 502 560
- EP-A- 0 564 035
- WO-A-89/07115
- DATABASE WPI Derwent Publications Ltd., London, GB; AN 72-37504T & JP-A-47 019 699 (TOA GOSEI)

## Description

La présente invention concerne des copolymères greffés du chlorure de vinyle présentant une résistance aux chocs élevée, ainsi qu'un procédé pour les produire et leur utilisation pour l'extrusion de profilés. Elle concerne plus particulièrement des copolymères du chlorure de vinyle greffés sur un mélange de polymères renforçants, un procédé pour les produire et leur utilisation pour l'extrusion de profilés.

Il est bien connu de recourir pour l'extrusion de profilés en polychlorure de vinyle, tels que des profilés pour châssis à usage extérieur, à des compositions comprenant des copolymères renforçants, généralement de nature élastomérique, tels que, par exemple, des polymères d'acrylates d'alkyles ou encore des copolymères d'éthylène et d'acétate de vinyle. Ces compositions sont obtenues soit par mélange externe de polychlorure de vinyle avec des polymères renforçants du type précité, soit par utilisation de polychlorure de vinyle modifié "in situ" par polymérisation avec greffage de polychlorure de vinyle sur de tels polymères renforçants soit encore par mélange externe de polychlorure de vinyle modifié avec des polymères renforçants.

Dans la demande de brevet JA-A-47-19699 du 3 avril 1969, on divulgue notamment des copolymères modifiés du chlorure de vinyle issus de la polymérisation de 99 à 90 parties en poids de chlorure de vinyle en présence de 1 à 10 parties en poids d'un mélange de polymères renforçants constitué de 50 à 95 parties en poids d'un polyacrylate d'alkyle en C₄ à C₁₃ contenant de 0,1 à 5 parties d'un comonomère à double insaturation éthylénique (réticulant) et de 50 à 5 parties en poids d'un copolymère d'éthylène et d'acétate de vinyle. Ce document divulgue des copolymères de chlorure de vinyle dont les teneurs en copolymère d'éthylène et d'acétate de vinyle peuvent varier indifféremment entre environ 0,05 et 5 % en poids.

Dans la plupart des exemples de réalisation, le polyacrylate utilisé est du polyacrylate d'éthylhexyle. Seul l'exemple 11 divulgue la mise en oeuvre de polyacrylate de butyle. L'exemple en cause divulgue plus précisément la polymérisation de 380 parties en poids de chlorure de vinyle (avec un taux de conversion de 85 %) en présence d'un mélange constitué de 13 parties en poids de polyacrylate de butyle et de 7 parties en poids d'un copolymère d'éthylène et d'acétate de vinyle contenant environ 33 % d'acétate de vinyle. Le copolymère du chlorure de vinyle issu de cette polymérisation comprend donc plus de 2 % en poids de copolymère d'éthylène et d'acétate de vinyle et de l'ordre de 3,8 % en poids de polyacrylate de butyle.

Il a maintenant été constaté que les copolymères du chlorure de vinyle de ce type dont les teneurs en copolymère d'éthylène et d'acétate de vinyle sont supérieures à 2 % en poids conduisent à des produits extrudés, tels que des profilés, présentant un retrait à chaud inacceptable. De plus, de tels copolymères ne conduisent pas, dans toutes les conditions de mise en oeuvre, à des propriétés de résistance aux chocs optimales, de sorte qu'un même copolymère pourra procurer des objets façonnés présentant, notamment, une résistance aux chocs significativement différente selon la machine utilisée pour sa mise en oeuvre (transformation en article façonné) à l'état fondu.

La présente invention vise à procurer de nouveaux copolymères du chlorure de vinyle ne présentant aucun des inconvénients précités et qui, en particulier, présentent une résistance aux chocs élevée dans une large plage de conditions de mise en oeuvre et, en particulier, dans des conditions de mise en oeuvre peu malaxeuses et donc défavorables.

A cet effet, l'invention concerne des copolymères greffés du chlorure de vinyle sur un mélange de polyacrylate de butyle et de copolymère d'éthylène et d'acétate de vinyle, caractérisés en ce qu'ils contiennent au total d'environ 3 à 10 % en poids du mélange de polyacrylate de butyle faiblement réticulée, susceptible d'être obtenu par la copolymérisation de l'acrylate de butyle et d'environ 0,1 à environ 5 % en poids d'un comonomère comprenant au moins deux insaturations éthyléniques, et de copolymère d'éthylène et d'acétate de vinyle, contenant d'environ 20 à 50 % en poids d'acétate de vinyle, et en ce que leur teneur totale en copolymère d'éthylène et d'acétate de vinyle est inférieure à 2 % en poids.

Par copolymères greffés du chlorure de vinyle, on entend désigner des copolymères du chlorure de vinyle contenant une fraction de polychlorure de vinyle greffé sur le polyacrylate de butyle faiblement réticulé et le copolymère d'éthylène et d'acétate de vinyle et une fraction de polychlorure de vinyle libre.

La teneur totale des copolymères greffés du chlorure de vinyle en polyacrylate de butyle et copolymère d'éthylène et d'acétate de vinyle désigne, pour chacun d'eux, la somme des teneurs en polyacrylate de butyle et en copolymère d'éthylène et d'acétate de vinyle greffés et non greffés.

Des copolymères greffés du chlorure de vinyle préférés selon la présente invention contiennent au total d'environ 4 à 8 % en poids du mélange de polyacrylate de butyle faiblement réticulé et de copolymère d'éthylène et d'acétate de vinyle.

Les copolymères greffés de chlorure de vinyle selon l'invention contiennent généralement au total au moins 0,15 % en poids de copolymère d'éthylène et d'acétate de vinyle et, de préférence au moins 0,4 % en poids. Avantageusement, leur teneur en copolymère d'éthylène et d'acétate de vinyle ne dépasse pas 1,5 % en poids au total.

Des copolymères greffés du chlorure de vinyle tout particulièrement préférés contiennent donc au total d'environ 4 à 8 % en poids du mélange de polyacrylate de butyle faiblement réticulé et de copolymère d'éthylène et d'acétate de vinyle et présentent une teneur en copolymère d'éthylène et d'acétate de vinyle d'environ 0,40 à environ 1,50 % en poids.

Par ailleurs, on donne la préférence aux copolymères greffés du chlorure de vinyle selon l'invention dans lesquels le rapport pondéral de la totalité du polymère d'acrylate de butyle à la totalité du copolymère d'éthylène et d'acétate de vinyle est supérieur à 2 et, plus particulièrement encore au moins égal à 4.

Les polyacrylates de butyle faiblement réticulés et les copolymères d'éthylène et d'acétate de vinyle constituent des polymères connus en tant que tels.

Par polyacrylate de butyle faiblement réticulé (ci-après désigné sous le vocable "polymère PBA"), on entend désigner les polyacrylates de butyle résultant de la mise en oeuvre à la polymérisation de l'acrylate de butyle d'environ 0,1 à environ 5 % en poids d'un comonomère comprenant au moins deux insaturations éthyléniques. Le plus souvent, ce comonomère ne contient que deux insaturations éthyléniques et est mis en oeuvre à raison d'environ 0,5 à 1,5 % en poids. A titre d'exemples d'agents réticulants utilisables, on peut mentionner le phtalate de diallyle ou le maléate de diallyle.

Par copolymère d'éthylène et d'acétate de vinyle (ci-après désigné sous le vocable "copolymère EVA"), on entend désigner aux fins de la présente invention les copolymères d'éthylène et d'acétate de vinyle contenant d'environ 20 à 50 % en poids d'acétate de vinyle. De préférence, ils en contiennent d'environ 35 à 45 % en poids.

On donne par ailleurs la préférence aux copolymères EVA à poids moléculaire relativement peu élevé dont la viscosité intrinsèque, mesurée à 20 °C dans le m-xylène, est comprise entre environ 0,03 et 0,15 l/g et, plus particulièrement encore, entre environ 0,05 et 0,10 l/g.

Par ailleurs, en vue d'assurer une bonne coulabilité et dès lors de bonnes propriétés d'alimentation des machines utilisées pour les mettre en oeuvre à l'état fondu, on donne la préférence aux copolymères greffés du chlorure de vinyle sur un mélange de polymère PBA et de copolymère EVA présentant une dimension moyenne des particules d'environ 110 à 160 µm.

Grâce à la présence de quantités mineures, inférieures à 2 % en poids au total, de copolymère EVA, les copolymères greffés de chlorure de vinyle selon l'invention présentent un ensemble de propriétés intéressantes. Ils présentent en particulier une porosité nettement supérieure et une durée de prise de plastifiant nettement inférieure à celles de copolymères greffés du chlorure de vinyle sur du polymère PBA seul à même teneur globale en polymère renforçant. Ces deux caractéristiques sont l'image de la meilleure aptitude à la transformation des copolymères selon l'invention.

Les copolymères greffés du chlorure de vinyle selon la présente invention, ainsi que les polymères PBA et copolymères EVA entrant dans leur composition peuvent être fabriqués par tout procédé connu, tels que par exemple la polymérisation en suspension ou en émulsion aqueuses.

Avantageusement, on fait appel à des polymères PBA ayant été obtenus par polymérisation en émulsion aqueuse et à des copolymères EVA ayant été obtenus par polymérisation en suspension aqueuse.

Avantageusement, la copolymérisation du chlorure de vinyle en présence du mélange de polymère PBA et de copolymère EVA est réalisée en suspension aqueuse.

L'invention concerne également un procédé particulièrement approprié pour fabriquer les copolymères greffés de chlorure de vinyle selon l'invention présentant, en outre, une dimension moyenne des particules allant d'environ 110 à 160 µm.

Suivant ce procédé, on soumet le chlorure de vinyle à la polymérisation en suspension aqueuse (en présence des ingrédients usuels de ce type de polymérisation, à savoir d'initiateurs oléosolubles et d'agents dispersants) en présence de quantités appropriées de latex coagulé de polyacrylate de butyle faiblement réticulé et de copolymère d'éthylène et d'acétate de vinyle à l'état de résine, le polyacrylate de butyle faiblement réticulé et le copolymère d'éthylène et d'acétate de vinyle étant tous deux présents en totalité dans la charge de polymérisation avant sa mise en chauffe en vue de la porter à la température de polymérisation.

Suivant un mode de réalisation particulièrement avantageux et préféré, le latex de polyacrylate de butyle faiblement réticulé est coagulé dans la charge de polymérisation en présence du chlorure de vinyle (ce qui revient à dire que le coagulant est chargé dans le réacteur de polymérisation après chargement du chlorure de vinyle) et avant sa mise en chauffe en vue de la porter à la température de polymérisation.

La température de polymérisation du chlorure de vinyle s'élève en général à une valeur comprise entre environ 70 et 53 °C et, de préférence, entre environ 67 et 56 °C.

La fraction soluble dans la cyclohexanone des copolymères greffés selon l'invention présente généralement un nombre K (mesuré à 25 °C dans la cyclohexanone) allant d'environ 58 à 70 et, de préférence d'environ 60 à 68. En première approximation, cette fraction soluble est représentative du polychlorure de vinyle libre.

La mise en oeuvre des copolymères greffés du chlorure de vinyle selon l'invention peut être réalisée par tous les procédés classiques de transformation des matières plastiques à l'état fondu, par exemple par extrusion, injection et calandrage. Pour ce faire, on leur incorpore préalablement les ingrédients usuels utilisés à la mise en oeuvre à l'état fondu des polymères du chlorure de vinyle, tels que des stabilisants thermiques, des lubrifiants et des agents facilitant la mise en oeuvre ("processing aid").

Les copolymères greffés du chlorure de vinyle selon l'invention sont avantageusement mis en oeuvre par extrusion. Ils conviennent particulièrement pour l'extrusion de profilés et, plus particulièrement encore pour l'extrusion de profilés pour châssis à usage extérieur.

L'utilisation des copolymères greffés du chlorure de vinyle selon l'invention pour l'extrusion de profilés, plus particulièrement de profilés pour châssis extérieur, constitue un autre aspect de la présente invention.

L'exemple 1 qui suit est destiné à illustrer l'invention.

Il concerne la fabrication d'un copolymère greffé de chlorure de vinyle sur un mélange de polyacrylate de butyle faiblement réticulé (présentant un taux d'insolubilité d'environ 95 % en poids dans le tétrahydrofuranne à 20 °C) et de copolymère d'éthylène et d'acétate de vinyle contenant environ 40 % en poids d'acétate de vinyle et présentant une viscosité intrinsèque, mesurée à 20 °C dans le m-xylène, égale à 0,08 l/g.

Le polyacrylate de butyle faiblement réticulé est mis en oeuvre à l'état d'émulsion aqueuse (latex) dont la teneur en matières solides s'élève à 20 % en poids. Il a été fabriqué par polymérisation en émulsion aqueuse en présence de 1 % en poids, par rapport au poids d'acrylate de butyle, de phtalate de diallyle. Le copolymère d'éthylène et d'acétate de vinyle est mis en oeuvre à l'état de résine (en perles).

L'exemple 2, donné à titre comparatif, concerne un copolymère greffé de chlorure de vinyle sur un polyacrylate de butyle faiblement réticulé, exempt de copolymère EVA, dont la teneur totale en polymère renforçant (polymère PBA) est identique à celle du copolymère selon l'exemple 1 (polymère PBA plus copolymère EVA).

### Exemple 1

Dans un autoclave de 4 m³ équipé d'un agitateur et d'un système de régulation thermique, on introduit successivement à 25 °C et sous une agitation de 30 t/min :
- 2 006 kg d'eau déminéralisée
- 472 g de peroxydicarbonate de dicétyle
- 1 281 g d'alcool polyvinylique (taux d'hydrolyse : 72 %, viscosité dynamique en solution à 4 % : 6 mPa.s)
- 428 g de dispersant (éther cellulosique)
- 11,8 kg de copolymère d'éthylène et d'acétate de vinyle.

Ensuite, on fait le vide (pression résiduelle absolue : 80 hPa). On introduit ensuite 307 kg de latex à 20 % en poids de matières solides (soit 61,4 kg) de polyacrylate de butyle faiblement réticulé, 1 180 kg de chlorure de vinyle et 5,9 kg de CaCl₂ (coagulant).

On chauffe le contenu de l'autoclave à 59 °C, température que l'on maintient constante pendant toute la durée de la polymérisation. Lorsque la pression dans l'autoclave diminue de 1,0 kg/cm², on refroidit le contenu de l'autoclave et on procède aux opérations habituelles de séparation et de récupération du monomère non converti et de séparation du polymère de la phase aqueuse. Le taux de conversion du chlorure de vinyle s'élève à 77 %.

Le copolymère ainsi fabriqué contient au total 1 % en poids de copolymère EVA et 5,3 % en poids de polymère PBA. Il se présente en particules dont le diamètre moyen (d50) s'élève à 152 µm. Sa teneur en matières insolubles dans la cyclohexanone à 25 °C s'élève à 6,8 % en poids. Le nombre K de la fraction soluble, mesuré à 25 °C dans la cyclohexanone, s'élève à 66,4.

### Exemple 2

A titre comparatif, on a fabriqué dans des conditions identiques un copolymère du chlorure de vinyle en tous points identiques sauf qu'il est obtenu par mise en oeuvre de 366 kg de latex de polymère PBA à 20 % en poids de matières solides. Sa teneur totale en polymère PBA s'élève à 6,3 % en poids. Il se présente en particules dont le diamètre moyen s'élève à 118 µm. Sa teneur en matières insolubles dans la cyclohexanone à 25 °C s'élève à 7 % en poids et le nombre K de la fraction soluble, mesuré à 25 °C dans la cyclohexanone, s'élève à 66,7.

Le tableau 1 rassemble les propriétés générales des résines produites selon les exemples 1 et 2 (comparatif).

Dans ce tableau, la porosité représente la quantité de diéthylhexylphtalate (DOP), exprimée en g, absorbée par 100 g de résine à température ambiante. La durée de prise de plastifiant à 75 °C y représente la durée nécessaire à la formation d'un prémix humide, à 75 °C, à partir d'un mélange pâteux constitué de 100 parties en poids de résine et de 200 parties de DOP. En pratique, cette durée est déterminée par la mesure du temps nécessaire pour que le couple de mélange dans un mélangeur planétaire atteigne la valeur de 40 g.m. Enfin, le taux de saturation en plastifiant à 75 °C y représente la quantité de DOP, exprimée en g, absorbée par la résine après maintien pendant 30 minutes à 75 °C d'un mélange de 100 parties en poids de résine avec 200 parties de DOP.

La comparaison des résultats figurant au tableau 1 fait apparaître un gain significatif en porosité et une réduction sensible de la durée de prise de plastifiant et du taux de saturation en plastifiant pour le copolymère greffé de chlorure selon l'invention (exemple 1) par comparaison avec le copolymère greffé exempt de copolymère EVA à teneur globale en polymère renforçant identique (exemple 2, comparatif).

A partir du copolymère greffé de chlorure de vinyle selon l'invention (exemple 1) et du copolymère greffé exempt de copolymère EVA (exemple 2, comparatif), on a préparé des prémélanges ("premix") dont la composition pondérale figure ci-dessous :

| | |
|---|---|
| Copolymère du chlorure de vinyle | 100 |
| Phosphite dibasique de plomb | 2,5 |
| Stéarate dibasique de plomb | 1,5 |
| Stéarate de calcium | 0,5 |
| Agent de mise en oeuvre acrylique | 1 |
| Lubrifiant interne | 0,15 |
| Lubrifiants externes | 0,20 |
| Carbonate de calcium naturel broyé | 5 |
| Dioxyde de titane | 5 |

Lesdits prémélanges ont été préparés dans un mélangeur rapide (vitesse de rotation : 1 500 t/min). L'ordre d'introduction des constituants a été le suivant :
- copolymère greffé du chlorure de vinyle
- après 1 minute : tous les autres ingrédients sauf le dioxyde de titane
- à 90 °C : le dioxyde de titane.

Lorsque la température du prémélange a atteint 110 °C, celui-ci a été déchargé dans un mélangeur refroidisseur (vitesse de rotation : 350 t/min; temps de séjour : 15 min).

Au départ des premix ainsi fabriqués, des profilés ont été extrudés sur machine double-vis à vis coniques de laboratoire dans les conditions suivantes :
- températures d'extrusion (°C)
   - fourreau :: 190-180
   - raccord :: 190
   - filière :: 190
   - vis :: 130
- débit d'extrusion : 7 kg/h
- énergie spécifique de malaxage (Wh/kg) : 68 (exemple 1)
   58 (exemple 2)

Dans le tableau 2 sont consignés les résultats des mesures de la brillance des profilés (mesurée selon la norme DIN 67530), de la résilience Charpy avec simple entaille en V (rayon à fond d'entaille de 0,1 mm) évaluée, sur des éprouvettes prélevées dans la face supérieure des profilés, selon la norme BS 2782, méthode 359 telle que définie dans la norme générique BS 7413 caractérisant les PVC modifiés, ainsi que de l'homogénéité des profilés évaluée sur des coupes microtomiques de 40 à 50 µm d'épaisseur prélevées dans une face du profilé et examinées par microscopie optique (grossissement : 40x).

L'homogénéité desdites coupes est évaluée visuellement par comparaison à une échelle de référence : 1 = excellent; 5 = mauvais.

La comparaison des résultats de ces évaluations fait apparaître le gain substantiel que procure le copolymère greffé du chlorure de vinyle selon l'invention (exemple 1) par comparaison avec un copolymère du chlorure de vinyle ne contenant que du polyacrylate de butyle faiblement réticulé à même teneur totale en polymère renforçant (exemple 2, comparatif) tant sur le plan de l'homogénéité et de la brillance des échantillons, que sur le plan de la résistance aux chocs. Ces résultats améliorés sont le reflet d' une meilleure fragmentation des grains de copolymère greffé selon l'invention dans les conditions d'extrusion peu malaxeuses mises en oeuvre dans les exemples. A noter en particulier l'amélioration très appréciable de la résilience Charpy avec simple entaille en V réflétée par le fait que les échantillons selon l'exemple 1 ont présenté 90 % de ruptures ductiles (RD) et seulement 10 % de ruptures fragiles (RF) par opposition aux échantillons comparatifs ayant présenté 100 % de ruptures fragiles.

**TABLEAU 1**

| | EXEMPLE 1 | EXEMPLE 2 |
|---|---|---|
| Caractéristiques : | | |
| Nombre K | 66,4 | 66,7 |
| Teneur en insoluble (%) (dans la cyclohexanone à 25 °C) | 6,8 | 7,0 |
| | | |
| Masse volumique apparente (kg/dm³) | 0,568 | 0,594 |
| | | |
| Porosité, g de DOP | 10,2 | 5,7 |

| Granulométrie | | |
|---|---|---|
| d50 (µm) | 152 | 118 |
| | | |
| Durée de prise de plastifiant à 75 °C (min.s) | 2,20 | 6,46 |
| | | |
| Taux de saturation en plastifiant à 75 °C après 30 min, g. de DOP | 158 | 146 |

**TABLEAU 2**

| | EXEMPLE 1 | EXEMPLE 2 |
|---|---|---|
| Homogénéité sur coupes microtomiques | 1 | 3 |
| | | |
| Brillance mesurée à 60 ° (%) | 38 | 23 |
| | | |
| Résilience Charpy BS 7413 (kJ/m²) | 14,7 | 12,6 |
| (à 23 °C) | (1 RF + 9 RD) | (10 RF) |
| Ecart-type (kJ/m²) | - | 1,1 |
| | (moyenne des 9 RD 62,3 kJ/m² +/- 2) | |

## Revendications

1. Copolymères greffés du chlorure de vinyle sur un mélange de polyacrylate de butyle et de copolymère d'éthylène et d'acétate de vinyle, caractérisés en ce qu'ils contiennent au total d'environ 3 à 10 % en poids du mélange de polyacrylate de butyle faiblement réticulée, susceptible d'être obtenu par la copolymérisation de l'acrylate de butyle et d'environ 0,1 à environ 5 % en poids d'un comonomère comprenant au moins deux insaturations éthyléniques, et de copolymère d'éthylène et d'acétate de vinyle, contenant d'environ 20 à 50 % en poids d'acétate de vinyle, et en ce que leur teneur totale en copolymère d'éthylène et d'acétate de vinyle est inférieure à 2 % en poids.

2. Copolymères greffés du chlorure de vinyle selon la revendication 1, caractérisés en ce qu'ils contiennent au total d'environ 4 à 8 % en poids du mélange du polyacrylate de butyle et du copolymère d'éthylène et d'acétate de vinyle.

3. Copolymères greffés du chlorure de vinyle selon les revendications 1 ou 2, caractérisés en ce qu'ils contiennent au total au moins 0,15 % en poids du copolymère d'éthylène et d'acétate de vinyle.

4. Copolymères greffés du chlorure de vinyle selon les revendications 1 à 3, caractérisés en ce qu'ils contiennent au total d'environ 0,40 à 1,50 % en poids du copolymère d'éthylène et d'acétate de vinyle.

5. Copolymères greffés du chlorure de vinyle selon les revendications 1 à 4, caractérisés en ce que le rapport pondéral de la totalité du polymère d'acrylate de butyle à la totalité du copolymère d'éthylène et d'acétate de vinyle est au moins égal à 4.

6. Copolymères greffés du chlorure de vinyle selon les revendications 1 à 5, caractérisés en ce que le copolymère d'éthylène et d'acétate de vinyle contient d'environ 35 à 45 % en poids d'acétate de vinyle et en ce que sa viscosité intrinsèque, mesurée à 20 °C dans le m-xylène est comprise entre environ 0,05 et 0,10 l/g.

7. Copolymères greffés du chlorure de vinyle selon les revendications 1 à 6, caractérisés en ce qu'ils présentent une dimension moyenne des particules d'environ 110 à 160 µm.

8. Procédé pour la fabrication de copolymères greffés du chlorure de vinyle selon les revendications 1 à 7, caractérisé en ce qu'on soumet le chlorure de vinyle à la polymérisation en suspension aqueuse en présence de quantités appropriées de latex coagulé du polyacrylate de butyle et du copolymère d'éthylène et d'acétate de vinyle à l'état de résine, le polyacrylate de butyle et le copolymère d'éthylène et d'acétate de vinyle étant tous deux présents en totalité dans la charge de polymérisation avant sa mise en chauffe en vue de la porter à la température de polymérisation.

9. Procédé pour la fabrication de copolymères greffés du chlorure de vinyle selon la revendication 8, caractérisé en ce que le latex du polyacrylate de butyle est coagulé dans la charge de polymérisation en présence du chlorure de vinyle et avant sa mise en chauffe en vue de la porter à la température de polymérisation.

10. Utilisation des copolymères greffés du chlorure de vinyle selon les revendications 1 à 7 pour l'extrusion de profilés.

11. Utilisation des copolymères greffés du chlorure de vinyle selon la revendication 10 pour l'extrusion de profilés pour châssis à usage extérieur.

## Claims

1. Graft copolymers of vinyl chloride on a mixture of polybutyl acrylate and of copolymer of ethylene and vinyl acetate, characterized in that they contain in total from approximately 3 to 10 % by weight of the mixture of weakly crosslinked polybutyl acrylate, susceptible of being obtained by copolymerization of butyl acrylate with from approximately 0,1 to approximately 5 % by weight of a comonomer comprising at least two ethylenic unsaturations, and of copolymer of ethylene and vinyl acetate, containing from approximately 20 to 50 % by weight of vinyl acetate, and in that their total content of copolymer of ethylene and vinyl acetate is lower than 2 % by weight.

2. Graft copolymers of vinyl chloride according to Claim 1, characterized in that they contain in total from approximately 4 to 8 % by weight of the mixture of polybutyl acrylate and of copolymer of ethylene and vinyl acetate.

3. Graft copolymers of vinyl chloride according to Claims 1 or 2, characterized in that they contain in total at least 0.15 % by weight of copolymer of ethylene and vinyl acetate.

4. Graft copolymers of vinyl chloride according to Claims 1 to 3, characterized in that they contain in total from approximately 0.40 to 1.50 % by weight of copolymer of ethylene and vinyl acetate.

5. Graft copolymers of vinyl chloride according to Claims 1 to 4, characterized in that the weight ratio of the totality of the butyl acrylate polymer to the totality of the copolymer of ethylene and vinyl acetate is at least 4.

6. Graft copolymers of vinyl chloride according to Claims 1 to 5, characterized in that the copolymer of ethylene and vinyl acetate contains from approximately 35 to 45 % by weight of vinyl acetate and in that its intrinsic viscosity, measured at 20°C in m-xylene, is between approximately 0.05 and 0,10 l/g.

7. Graft copolymers of vinyl chloride according to Claims 1 to 6, characterized in that they have a mean particle size of approximately 110 to 160 µm.

8. Process for the manufacture of graft copolymers of vinyl chloride according to Claims 1 to 7, characterized in that vinyl chloride is subjected to aqueous suspension polymerization in the presence of appropriate quantities of coagulated latex of polybutyl acrylate and of copolymer of ethylene and vinyl acetate in the form of resin, the polybutyl acrylate and the copolymer of ethylene and vinyl acetate both being present in totality in the polymerization charge before it is heated with a view to taking it to the polymerization temperature.

9. Process for the manufacture of graft copolymers of vinyl chloride according to Claim 8, characterized in that the latex of polybutyl acrylate is coagulated in the polymerization charge in the presence of vinyl chloride and before it is heated with a view to being taken to the polymerization temperature.

10. Use of the graft copolymers of vinyl chloride according to Claims 1 to 7 for the extrusion of sections.

11. Use of the graft copolymers of vinyl chloride according to Claim 10 for the extrusion of sections for frameworks for external use.

## Patentansprüche

1. Gepfropfte Copolymere von Vinylchlorid auf einem Gemisch von Polybutylacrylat und Ethylen-Vinylacetat-Copolymer, dadurch gekennzeichnet, dass sie insgesamt etwa 3 bis 10 Gew.-% des Gemischs aus schwach vernetztem Polybutylacrylat, das erhalten werden kann durch die Copolymerisation des Butylacrylats und etwa 0,1 bis etwa 5 Gew.-% eines Comonomers, das wenigstens zwei ethylenisch ungesättigte Stellen enthält, und Ethylen-Vinylacetat-Copolymer, das etwa 20 bis 50 Gew.% Vinylacetat enthält, enthalten, und dadurch, dass ihr Gesamtgehalt an Ethylen-Vinylacetat-Copolymer kleiner als 2 Gew.-% ist.

2. Gepfropfte Vinylchloridcopolymere gemäß Anspruch 1, dadurch gekennzeichnet, dass sie insgesamt etwa 4 bis 8 Gew.-% des Gemischs des Polybutylacrylats und des Ethylen-Vinylacetat-Copolymers enthalten.

3. Gepfropfte Vinylchloridcopolymere gemäß den Ansprüchen 1 oder 2, dadurch gekennzeichnet, dass sie insgesamt wenigstens 0,15 Gew.-% des Ethylen-Vinylacetat-Copolymers enthalten.

4. Gepfropfte Vinylchloridcopolymere gemäß den Ansprüchen 1 bis 3, dadurch gekennzeichnet, dass sie insgesamt etwa 0,40 bis 1,50 Gew.-% des Ethylen-Vinylacetat-Copolymers enthalten.

5. Gepfropfte Vinylchloridcopolymere gemäß den Ansprüchen 1 bis 4, dadurch gekennzeichnet, dass das Gewichtsverhältnis des gesamten Butylacrylatpolymers zum gesamten Ethylen-Vinylacetat-Copolymer wenigstens gleich 4 ist.

6. Gepfropfte Vinylchloridcopolymere gemäß den Ansprüchen 1 bis 5, dadurch gekennzeichnet, dass das Ethylen-Vinylacetat-Copolymer etwa 35 bis 45 Gew.-% Vinylacetat enthält, und dadurch, dass seine intrinsische Viskosität, gemessen bei 20 °C in m-Xylen, zwischen etwa 0,05 und 0,10 l/g beträgt.

7. Gepfropfte Vinylchloridcopolymere gemäß den Ansprüchen 1 bis 6, dadurch gekennzeichnet, dass sie eine mittlere Teilchengröße von etwa 110 bis 160 µm aufweisen.

8. Verfahren zur Herstellung von gepfropften Vinylchloridcopolymeren gemäß den Ansprüchen 1 bis 7, dadurch gekennzeichnet, dass man das Vinylchlorid der Polymerisation in wässriger Suspension in Gegenwart geeigneter Mengen von koaguliertem Polybutylacrylatlatex und des Ethylen-Vinylacetat-Copolymers im Harzzustand unterzieht, wobei das Polybutylacrylat und das Ethylen-Vinylacetat-Copolymer beide in ihrer Gesamtheit im Polymerisationsansatz vorliegen, bevor er erhitzt wird, um ihn auf die Polymerisationstemperatur zu bringen.

9. Verfahren zur Herstellung von gepfropften Vinylchloridcopolymeren gemäß Anspruch 8, dadurch gekennzeichnet, dass der Polybutylacrylatlatex in dem Polymerisationsansatz in Gegenwart des Vinylchlorids und vor seinem Erhitzen, um ihn auf die Polymerisationstemperatur zu bringen, koaguliert wird.

10. Verwendung der gepfropften Vinylchloridcopolymere gemäß den Ansprüchen 1 bis 7 für die Extrusion von Profilen.

11. Verwendung der gepfropften Vinylchloridcopolymere gemäß Anspruch 10 für die Extrusion von Profilen für Rahmen im Außenbereichsgebrauch.
